# EUROPÄISCHE PATENTSCHRIFT

(11) **EP 2 386 375 B1**
(45) Veröffentlichungstag und Bekanntmachung des Hinweises auf die Patenterteilung: **04.10.2017**
(21) Anmeldenummer: 11161935.9
(22) Anmeldetag: 11.04.2011
(51) Int. Cl.: B23D 57/00, B28D 1/08, B65H 51/22

(54) **Seilspeicher**
Wire storage
Dispositif de stockage de fil

(30) Priorität: 16.04.2010 CH 5452010
(43) Veröffentlichungstag der Anmeldung: 16.11.2011
(73) Patentinhaber: Husqvarna AB, 561 82 Huskvarna (SE)
(72) Erfinder: Keller, Reinhard, 5724, Dürrenäsch (CH)
(74) Vertreter: Johansson, Fredrik Kristofer

(56) Entgegenhaltungen:
- DE-B1- 1 574 620
- DE-U1- 29 805 157
- US-A- 4 749 137
- US-A- 4 766 937

## Beschreibung

Die vorliegende Erfindung betrifft einen Seilspeicher nach dem Oberbegriff von Anspruch 1.

Solche Seilspeicher werden beispielsweise für Seilsägen verwendet, wobei mit den Seilsägen harte Materialien wie Beton, Stein oder Mauerwerk etc. geschnitten wird, bis hin zu stahlbewehrten Bauteilen. Der Schnitt wird durch ein umlaufendes Sägeseil geführt, das in der Regel diamantbesetzte Segmente aufweist, die den Schnitt bewirken. Der Sägevorgang setzt voraus, dass das Sägeseil der gewünschten Schnittlinie entsprechend verlegt, dann gespannt und in gespanntem Zustand im Umlauf gehalten wird, so dass es sich der Schnittlinie entlang in das zu schneidende Material einfrisst und auf diese Weise den Schnitt legt.

Der Vorteil einer Seilsäge liegt unter anderem darin, dass unter geometrisch schwierigen Verhältnissen das Seil zwischen dem Antriebsaggregat mit dem Antrieb für den Umlauf des Seils und dem Ort des vorgesehenen Schnitts über Umlenkrollen geführt werden kann. Generell ist es so, dass jeder beliebige Schnitt ausgeführt werden kann, sofern sich die notwendigen Umlenkrollen installieren lassen. Nachteilig ist den Seilsägen aber, dass mit dem fortschreitenden Schnitt die notwendige Betriebsspannung im Seil fällt. Wird das Seil beispielsweise um eine Säule herumgeschlungen, um diese durchzuschneiden, kann das Antriebsaggregat im geeigneten Abstand zur Säule aufgestellt werden, so dass das Seil die Betriebsspannung besitzt. Dem tiefer werdenden Schnitt entsprechend muss dann das Antriebsaggregat laufend zurückgesetzt werden, um die Seilspannung zu halten. In Marmorsteinbrüchen ist es bekannt, das Antriebsaggregat auf einer Schiene dem Schnittfortschritt entsprechend nach hinten laufen zu lassen, wobei der Weg des Antriebsaggregats der Schnitttiefe entspricht.

Die Verlegung einer Schiene ist jedoch nicht immer möglich. Je nach den räumlichen Verhältnissen beispielsweise in Gebäuden besteht nicht genügend Weg, um das Antriebsaggregat im notwendigen Mass zu verschieben. Entsprechend wird dann das Antriebsaggregat wie die Umlenkrollen festgelegt, z.B. durch verdübeln, und ein Seilspeicher eingesetzt.

Solch ein Seilspeicher besteht aus zwei Sätzen von Rollen, zwischen denen das Seil hin und her läuft. Werden die Rollensätze von einander entfernt, nimmt der Seilspeicher mehr Seil auf, umgekehrt, wenn die Rollensätze zu einander hin bewegt werden. Damit kann im Betrieb der Seilsäge das laufend frei werdende Seil durch den Seilspeicher aufgenommen werden, indem die Rollensätze dem Schnittfortschritt entsprechend von einander stufenlos entfernt werden. Dieser seit mehr als zwei Jahrzehnten eingesetzte Seilspeicher besitzt trotz mittlerweile ausgereifter und stets weiterentwickelter Konstruktion verschiedene, bauartbedingte Nachteile.

Ein wesentlicher Nachteil besteht darin, dass die beiden Rollensätze mit dem zwischen diesen hin- und her laufenden Sägeseil einem Flaschenzug entsprechen: um die betriebsnotwendige Seilspannung zu halten, müssen die Rollensätze mit hoher Kraft von einander getrennt gehalten werden. Je grösser das Aufnahmevermögen des Seilspeichers sein soll, desto mehr Rollen müssen eingesetzt werden, mit einer entsprechenden Anzahl von hin- und her laufenden Seilabschnitten, wobei dann die zwischen den Rollensätzen wirkende Kraft der Seilspannung multipliziert mit der Anzahl der Seilabschnitte entspricht. Damit kann diese Kraft leicht mehrere hundert Kilo erreichen, was eine entsprechend aufwendige Mechanik für den im Betrieb sich laufend verändernden Abstand der Rollensätze bedingt.

An sich könnte das Fassungsvermögen eines Seilspeichers auch durch den grösseren Abstand der Rollensätze (an Stelle einer erhöhten Anzahl von Rollen) gesteigert werden. Jedoch werden durch den rauhen Schnittbetrieb im Seil Vibrationen und Stösse übertragen, durch welche die zwischen den Rollensätzen liegenden Seilabschnitte in Schwingungen geraten können, die den Umlauf des Seils im Speicher beeinträchtigen.

Entsprechend ist es nur mit erheblichem konstruktiven Aufwand möglich, mit dem vorbekannten Seilspeicher einerseits die gewünschte, flexible Speicherkapazität zu erreichen, andererseits eine Speicherkapazität von mehr als 10 m Seil zu ermöglichen.

Im Hinblick auf die flexible Speicherkapazität sei angemerkt, dass es auf der Baustelle oft schwierig ist, den Bedarf an Seilspeicher richtig abzuschätzen.

Einerseits weil die Lage des auszuführenden Schnitts oft aufgrund der Verhältnisse vor Ort bestimmt werden muss und dann der Weg des Seils während dem Schnitt (und damit die Länge des freiwerdenden Seils) so gut wie eben möglich abgeschätzt werden muss.

Andererseits sollte der Schnitt mit einem Seil vollständig durchgeführt werden können, da sich die Schnittsegmente abnutzen, d.h. im wirksamen Durchmesser kleiner werden, was einen im Querschnitt leicht V-förmigen Schnitt zur Folge hat. Ein neues Seil kann dann nicht im Grund des Schnitts eingesetzt werden, sondern tendiert dazu, sich oben, in einem breiteren Abschnitt des Schnitts zu verkeilen und zu reissen. Um diese Gefahr zu vermeiden, wird gerne ein auf jeden Fall genügend langes Seil eingesetzt, was wiederum zu erhöhtem Speicherbedarf führt.

Schliesslich ist es aber auch so, dass ein für den konkreten Schnitt zu langes Seil unerwünscht ist, weil es sich nicht vollständig abnutzt, aber möglicherweise für einen weiteren Schnitt, doch nicht mehr einsetzbar ist, was die Kosten für das Seil unnötig erhöht.

Wird der Seilspeicher sicherheitshalber mit der grösstmöglichen Anzahl Rollen ausgerüstet (für höchste Speicherkapazität) muss ein entsprechend längeres Seil engesetzt werden, das sich dann vielleicht nicht vollständig abnutzt. Wird der Speicher deswegen mit einer kleineren Anzahl Rollen ausgerüstet, kann er möglicherweise das während dem Schnitt freiwerdende Seil nicht aufnehmen, so dass der Sägevorgang unterbrochen und der Speicher nachgerüstet werden muss, was ebenfalls die Kosten für den Schnitt verteuert. Ein Seilspeicher gemäß dem Oberbegriff des Anspruchs 1 ist der US4749137 zu entnehmen. Entsprechend ist es die Aufgabe der Erfindung, einen verbesserten Seilspeicher bereitzustellen. Diese Aufgabe wird durch einen Seilspeicher mit den Merkmalen von Anspruch 1 gelöst. Vorteilhafte Weiterbildungen der Erfindung sind den abhängigen Ansprüchen zu entnehmen. Die Erfindung wird nachstehend anhand der Figuren näher beschrieben.

Es zeigt:
- Figur 1: schematisch eine Skizze einer Seilsäge gemäss dem Stand der Technik im Einsatz,
- Figur 2: eine Sägemaschine konventioneller Art
- Figur 3: eine Ansicht einer bevorzugten Ausführungsform einer Seilsäge mit einem erfindungsgemässen Seilspeicher,
- Figur 4: eine Ansicht auf die Haspel der Ausführungsform von Figur 3
- Figur 5: eine Teilansicht der Sägemaschine von Figur 3 mit Blick auf die Seilführungsanordnung
- Figur 6a: eine Kurve, die die zyklische Bewegung der Seilführungsanordnung beschreibt,

- Figur 6b: die zur Kurve von Figur 6a gehörenden Masse,
- Figur 7: eine Ansicht der Seilsäge von Figur 3 beim Einrichten.

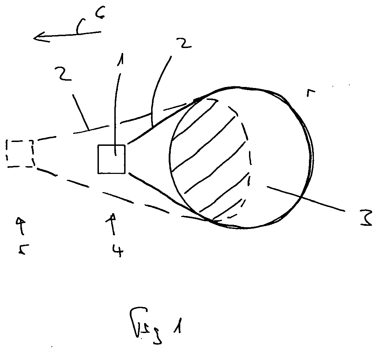

Figur 1 zeigt schematisch eine Skizze einer Seilsäge 1 gemäss dem Stand der Technik, mit einem Sägeseil 2, sowie eine Säule 3, die durchschnitten werden soll. Die Seilsäge 1 befindet sich am Ort 4, ist eingerichtet und das Sägeseil 2 am Ort des vorgesehenen Schnitts um die Säule 3 herumgeschlungen. Gestrichelt dargestellt ist das Sägeseil 2 nach einer gewissen Zeit, in der der Schnitt in der Säule 3 bereits teilweise gelegt ist. Der noch nicht geschnittene Bereich der Säule 3 ist schraffiert. Um die Seilspannung zu halten, ist die Seilsäge 1 zurückversetzt und befindet am Ort 5. Der Verschiebeweg der Seilsäge 1 ist durch den Pfeil 6 angedeutet. Die Verschiebung muss stufenlos erfolgen und auf den Schnittfortschritt abgestimmt sein.

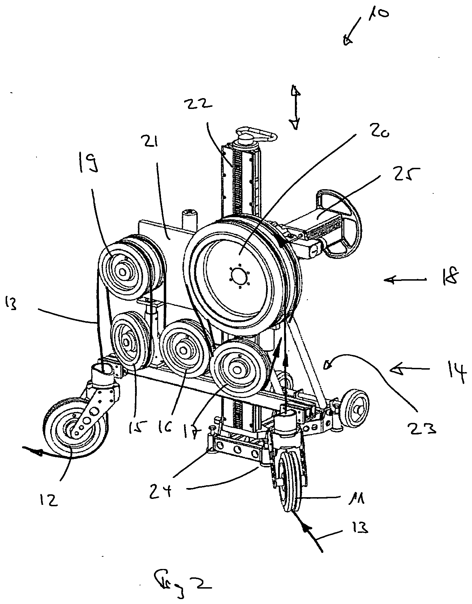

Figur 2 zeigt eine Sägemaschine 10 konventioneller Art mit einem Seilspeicher, mit welchem die Seilsäge 1 (Figur 1) während dem Schnitt an einem vorbestimmten, festen Ort belassen werden kann.

Die Sägemaschine 10 besitzt eine Einlaufrolle 11 und eine Auslaufrolle 12 für das Sägeseil 13. Weiter weist die Sägemaschine 10 einen unteren Rollensatz 14 mit Rollen 15 bis 17 (die Rolle 17 ist als Doppelrolle ausgebildet) und einen oberen Rollensatz 18 mit Rollen 19 und 20 auf, wobei die Rollen 19, 20 als Doppelrollen ausgebildet sind. Der obere Rollensatz 18 ist an einem Balken 21 festgelegt, der seinerseits an einer Säule 22 vertikal verfahren werden kann. Der untere Rollensatz 14 ist gegenüber der Säule 21 stationär ausgebildet. Wird der obere Rollensatz 17 in Richtung des Doppelpfeils an der Säule 21 verfahren, lässt sich der Abstand zwischen den Rollensätzen 13 (einschliesslich der Ein- und Auslaufrollen 11,12) und 18 stufenlos einstellen. Ein Antriebsmotor 25 treibt die Rolle 20 an, so dass das Seil 13 betriebsfähig umlaufen kann. Da die Rolle 20 als Doppelrolle ausgebildet ist, ist der Umschlingungswinkel gross genug, um einen Schlupf des Seils 13 zu vermeiden.

Über das Fahrgestell 23 kann die Sägemaschine 10 bewegt und an den Halterungen 24 ortsfest, z.B. mit Dübeln, festgelegt werden

In der Figur ist der Verlauf des Sägeseils 13 um die Rollen 15 bis 17 und 19,20 eingezeichnet. Insgesamt acht Seilabschnitte verlaufen zwischen den Rollensätzen 14,18, mit der Folge, dass für die Bewegung des Rollensatzes 18 die achtfache Seilspannungskraft aufgewendet werden muss.

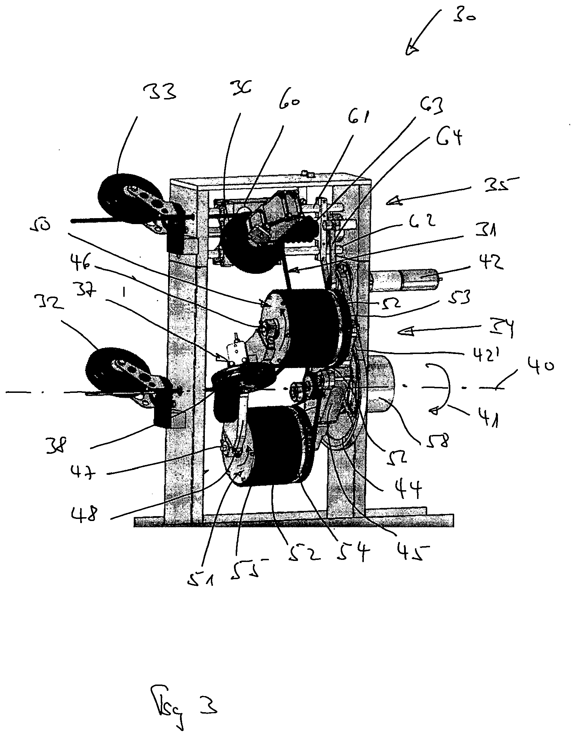

Figur 3 zeigt eine Ansicht einer bevorzugten Ausführungsform der erfindungsgemässen Seilspeichers 30, der in der dargestellten Ausführung den unten beschriebenen Antrieb für das Sägeseil 31 aufweist, somit als Sägemaschine ausgebildet ist.

In der Figur ersichtlich sind eine Einlaufrolle 32 und eine Auslaufrolle 33 für das Sägeseil 31, das vor diesen Rollen 32,33 beliebig verlegt sein kann, und weiter eine Haspel 34. Im in der Figur durch das Seil 31 sichtbar gemachten Seilpfad (der als solcher durch die verschiedenen Komponenten der Seilsäge 30 definiert ist, auch wenn das Sägeseil 31 nicht verlegt ist) befindet sich unmittelbar vor der Haspel 34 eine Seilführungsanordnung 35, die eine Führungsrolle 36 aufweist.

Mit "vor der Haspel 34" ist hier nicht auf die für den Sägevorgang relevante Umlaufrichtung des Seils 31 Bezug genommen, die unabhängig von der Haspel 34 bestimmt werden kann, sondern auf den Wickelvorgang, durch welchen das Seil 31 auf die Haspel 34 aufgewickelt wird. Nachstehend wird die Speicherung des Seils 31 durch den Wickelvorgang erläutert, ohne dass dabei auf den während dem Sägen zugleich stattfindenden Umlauf des Seils 31 Bezug genommen wird.

Hinter der Haspel 34 befindet sich eine Seilführungseinrichtung 37 mit einer Umlenkrolle 38.

Die Haspel 34 besitzt eine strichpunktiert eingezeichnete Rotationsachse 40 und dreht für die Speicherung von Seil 31 in Richtung des Pfeils 41, wobei ein Antriebsmotor 42 über einen Zahnriemen 42' eine gezahnte Riemenscheibe 44 antreibt, die ihrerseits mit einem Träger 45 für die Wickelarme 46,47 der Haspel 34 verbunden ist. Die Wickelarme 46,47 sind endseitig durch einen zweiten Träger 48 mit einander verbunden, was der Haspel 34 verbesserte Stabilität verleiht.

Auf dem Wickelarm 46 befindet sich eine erste Rolle 50, auf dem Wickelarm 47 eine zweite Rolle 51. Die Rollen 50,51 sind mit neben einander liegenden, kreisförmig umlaufenden Rillen 52 versehen, die derart ausgebildet sind, dass das Seil 31 von ihnen aufgenommen werden kann und damit auf den Rollen 50,51 definiert aufliegt, also beispielsweise gegen seitliches Verrutschen gesichert ist. Weiter sind die Rollen 50,51 auf den Wickelarmen 46,47 verdrehbar angeordnet und je mit einer gezahnten Rollen-Riemenscheiben 53,54 fest verbunden, womit die Rollen-Zahnriemen 55,56 (ihrerseits angetrieben vom Rollen-Motor 58) die Rollen 50,51 in Umdrehungen versetzten können.

Es ergibt sich, dass die Haspel 34 über den Motor 42 rotiert werden kann, während die Rollen 50,51 ihrerseits und unabhängig von der Drehung der Haspel 34 über den Rollen-Motor 58 rotierbar sind. Die Rollen 50,51 drehen hier entsprechend dem auf ihren Stirnseiten eingezeichneten Pfeilen im gleichen Drehsinn, der demjenigen der der Haspel 34 entgegengesetzt ist (s. den Pfeil 41).

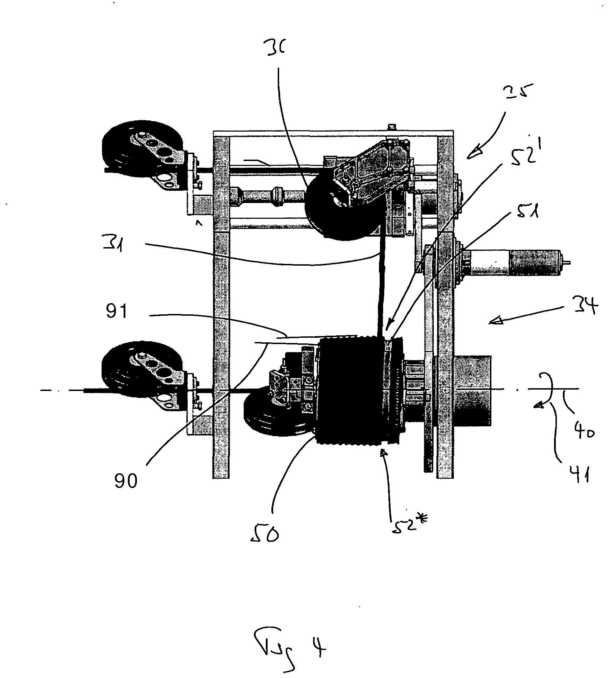

Die Wickelarme 46,47, und damit auch die auf diesen angeordneten Rollen 50,51, sind im gleichen Abstand zur Rotationsachse 40 der Haspel 34 angeordnet. Zwar liegen die Wickelarme 46,47 in parallelen Ebenen, verlaufen aber etwas windschief zu einander, so dass sie nur annähernd in derselben Richtung wie die Rotationsachse 40 ausgerichtet sind. Diese Verschränkung der Wickelarme 46,47 wird nachstehend in Zusammenhang mit der Figur 4 näher beschrieben.

Wie es nachstehend dargestellt ist, führt eine Drehung der Haspel 34 in Richtung des Pfeils 41 zum Aufwickeln (in der Gegenrichtung: zum Abwickeln) von Seil 31, d.h. zum Speichern (bzw. Freigeben) von Seil 31, während unabhängig von dem Speicherstatus die Drehung der Rollen 50,51 bewirkt, dass das Seil 31 durch die (stehende oder drehende) Haspel 34 hindurchlaufen kann, so dass das Seil 31 umläuft und der Schneidvorgang stattfindet.

Die Seilführungsanordnung 35 weist eine Führungsrolle 36 auf, die auf einem Schlitten 60 angeordnet ist, welcher auf Schienen 61,62 hin- und her laufen kann, parallel zur Rotationsachse 40 der Haspel 34. Der Schlitten 60 wird durch eine im Balg 63 verlaufende und deshalb nicht sichtbare Spindelwelle verschoben, wobei die Spindelwelle via Zahnriemen 64 vom Motor 42 angetrieben ist. Dadurch ist der Vorschub des Schlittens 60, und damit die Führungsrolle 36, an die Umdrehungen der Haspel 34 gekoppelt. Da die Führungsrolle 36 das Seil 31 aufnimmt, bestimmt sie den Seilpfad unmittelbar vor der Haspel 34. Mit anderen Worten ist die Seilführungsanordnung in Wicklungsrichtung vor der Haspel 36 angeordnet und ausgebildet, den Pfad von aufzuwickelndem Seil auf der Haspel 36 in Abhängigkeit vom Wicklungsfortschritt festzulegen.

Zudem verschiebt die Seilführungsanordnung 35 im Betrieb über die den Wickelarmen 46,47 entlang erfolgende Bewegung des Schlittens 60 (diese Bewegung erfolgt vom einen Ende der Haspel 34 bis zu deren anderem Ende) den unmittelbar vor der Haspel 34 gelegenen Seilpfad. Im Betrieb füllt sich so die Haspel 36 vom einen Ende her bis zum anderen Ende Lage für Lage mit Seil 31.

Die Position der Seilführungsanordnung 35 bestimmt dabei, in welche der Rillen 52 das auf die Haspel 34 aufzuwickelnde Seil 31 gelegt wird.

Wie oben erwähnt, befindet sich hinter der Haspel 34 eine Seilführungseinrichtung 37 mit einer Umlenkrolle 38. Wiederum ist der Begriff "hinter der Seilführungseinrichtung 37" unabhängig von der Umlaufrichtung des Seils 31 zu verstehen, die vom Drehsinn der Rollen 50,51 festgelegt wird. "Hinter" der Haspel 34 bezeichnet einen Abschnitt des Seilpfads, der in Aufwicklungsrichtung nach der Haspel 34 liegt, während "vor" der Haspel 34 einen Abschnitt des Seilpfads meint, der in Aufwicklungsrichtung vor der Haspel 34 liegt, so dass Seil 31, das in diesem Abschnitt des Seilpfads liegt, noch auf die Haspel 34 aufgewickelt werden kann.

Die Umlenkrolle 38 ist derart relativ zur Haspel 34 festgelegt, dass der Seilpfad hinter der Haspel 34 um die erste Rolle 50 herumläuft und nach dieser in einem Abschnitt mit der Rotationsachse 40 der Haspel 34 zusammenfällt. Dies ermöglicht, das Seil 31 in jeder beliebigen Drehstellung der Haspel 34 (d.h. in jedem Speicherzustand von Seil 31) über einen ortsfesten Abschnitt des Seilpfads nach aussen abzugeben oder, je nach Umlaufrichtung des Seils 31, von aussen zu übernehmen.

Werden die Rollen 50, 51 nicht angetrieben, stellt die Anordnung von Figur 3 einen Seilspeicher dar, der an einem beliebigen Ort im verlegten Seil dieses speichern kann. Bevorzugt wird aber mindestens eine der Rollen 51, 50 angetrieben, besonders bevorzugt beide Rollen 50,51, so dass der erfindungsgemässe Seilspeicher zusammen mit dem Seil 31 eine komplette Seilsäge 30 darstellt.

Zusammenfassend besitzt der erfindungsgemässe Seilspeicher 30 eine rotierbare Haspel 34, auf die Seil aufgewickelt werden kann, und Mittel, die den Pfad von zu speicherndem Seil im Speicher festlegen. Bei der hier dargestellten bevorzugten Ausführungsform weisen diese Mittel die oben beschriebene Seilführungsanordnung 35 und die Seilführungseinrichtung 37 auf, die den Pfad von zu speicherndem Seil 31 im Seilspeicher 30 festlegen, wobei der Pfad derart verläuft, dass das Seil 31 im Betrieb von der drehenden Haspel 34 ergriffen und damit aufgewickelt werden kann, wie dies nachstehend noch beschrieben ist. Weiter besitzt der erfindungsgemässe Seilspeicher 30 Mittel, um im Betrieb das auf der Haspel aufgewickelte Seil 31 auf dieser umlaufen zu lassen, wobei diese Mittel in der beschriebenen Ausführungsform die drehbaren Rollen 50,51 aufweisen über die das Seil 31 jederzeit und unabhängig vom Wickelstatus durch die Haspel 34 hindurchlaufen und damit für den Sägebetrieb umlaufen kann.

Figur 4 zeigt den Seilspeicher 30 von Figur 3 in einer Teilansicht (der Fuss des Speichers 30 ist weggelassen), wobei die Haspel 34 gegenüber der Ansicht von Figur 3 verdreht worden und nahezu horizontal ausgerichtet ist, so dass die erste Rolle 50 für den Betrachter vorne liegt und damit die zweite, hinten liegende Rolle 51 fast ganz verdeckt. Die erste Rolle 50 liegt aber etwas unterhalb der zweiten Rolle 51, so dass der obere Teil der hinten gelegenen Rolle 51 sichtbar ist ebenso die Kontur beider Rollen 50,51 und damit deren Verschränkung (s. oben) deutlich wird. Die eingezeichnete Linie 90 setzt die Kontur der vorderen Rolle 50 fort, die eingezeichnete Linie 91 diejenige der hinten gelegenen Rolle 51. Wären in Figur 4 die beiden Rollen 50,51 auf gleicher Höhe, wären die parallelen Ebenen, in denen die Wickelarme 46,47 liegen (s. oben) parallel zur Bildebene.

Die Figur zeigt den fast gefüllten Seilspeicher 30: die Rolle 50 ist vollständig bewickelt, in der Rolle 51 ist noch eine letzte Rille 52' frei. Dreht nun die Haspel 34 in Richtung des Pfeils 41 weiter, fährt die Rolle 51 hoch, die Rolle 50 hinunter, wobei die Führungsrolle 36 der Seilführungsanordnung 35 den Seilpfad so bestimmt, dass dass Seil 31 gerade gestreckt die Rille 52* der Rolle 50 erreicht und ohne Biegung, also immer noch gerade gestreckt in dieser Rille 52* liegt. Zugleich liegt dank der Verschränkung der Rollen 50,51 der Seilpfad so, dass das Seil 31, sobald es die Rolle 51 berührt, genau in in der Rille 52' zu liegen kommt, nach wie vor gerade gestreckt.

Im Ergebnis führt diese Verschränkung dazu, dass bei Rotation die Haspel 34, d.h. im Betrieb, auf den Wickelarmen (hier: auf den an den Wickelarmen angeordneten Rollen 50,51) aufgewickeltes Seil 31 einlagig aufgewickelt wird, Windung für Windung im Abstand neben einander (d.h. im Abstand, den die Rillen 52 von einander haben). Dabei verläuft das Seil 31 gerade von jeder Rille 52 in der einen Rolle 50,51 zu der nächsten Rille 52 der anderen Rolle 51,50, so dass bei Drehung der Rollen 50,51 das Seil 31 unabhängig vom Wicklungszustand ohne Weiteres durch die Haspel 34 durchlaufen kann.

Dass Mass der notwendigen Verschränkung der Wickelarme 46,47 (das in der Figur durch die Linien 90,91 verdeutlicht wird) bestimmt der Fachmann ohne Weiters aus dem Abstand der Wickelarme 46,47 von einander und dem Abstand, den die Rillen 52 zu einander haben.

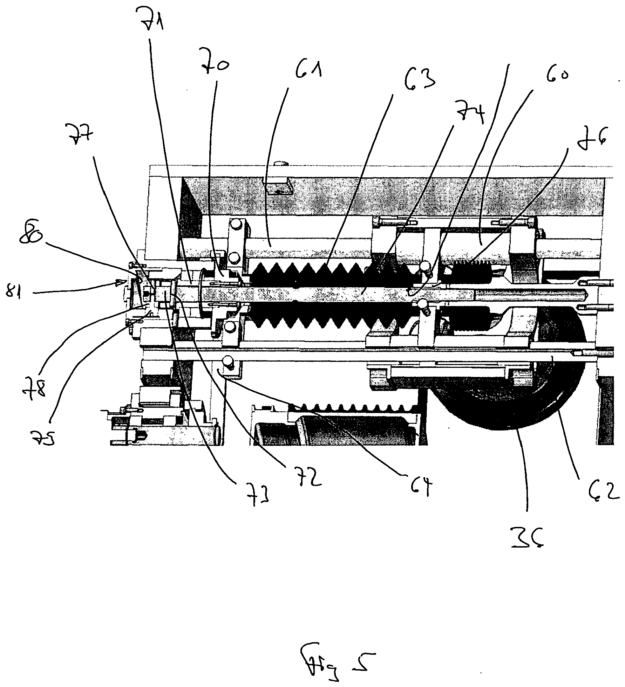

Figur 5 zeigt eine Ansicht der aufgeschnittenen die Seilführungsanordnung 35. Ausgehend von Figur 3 ist der Betrachter hinter der Zeichnungsebene und schaut nach vorne, so dass in Figur 5 die Führungsrolle 36 hinten liegt. Der Balg 63 ist aufgeschnitten. Ersichtlich sind die Schienen 61 und 62 (die Schiene 62 ist ebenfalls aufgeschnitten), auf denen der Schlitten 60 läuft. Der mit dem Motor 42 verbundene Zahnriemen 64 wirkt auf ein Riemenzahnrad 70, das mit einer Hülse 71 verbunden ist, die einen Stift 72 dreht, der wiederum in einem Schlitz 73 der Spindelwelle 74 sitzt und die Drehung von der Hülse 71 auf die Spindelwelle 74 überträgt. Die Verzahnung 75 der Spindelwelle 74 ist im Eingriff mit einer Gegenverzahnung 76 des Schlittens 60, der sich entsprechend der Rotation der Spindelwelle 74 den Schienen 60,61 bewegt. Die Verzahnung muss derart ausgelegt werden, dass sich pro zwei Umdrehungen der Spindelwelle 74 der Schlitten 60 um den Abstand zweier benachbarter Rillen 52 vorwärts bewegt (oder rückwärts bewegt, wenn der Speicher geleert werden soll).

Die Spindelwelle 74 ist nun in der Hülse 71 längsverschieblich gelagert und damit längsverschieblich gegenüber dem Stift 72, wobei der Schlitz 73 die Relativbewegung zwischen Spindelwelle 74 und Stift 72 aufnimmt. Über einen weiteren Stift 77 wird die Drehung der Spindelwelle 74 auf ein Positionierungselement 78 übertragen, dessen Kopf 79 in einer Führungsnut 80 einer feststehenden Kurvenscheibe 81 läuft. Die Führungsnut 80 ist geschlossen und schräg in der Kurvenscheibe 81 angeordnet, so dass jede Umdrehung der Spindelwelle 74 diese etwas vor und dann wieder zurückschiebt.

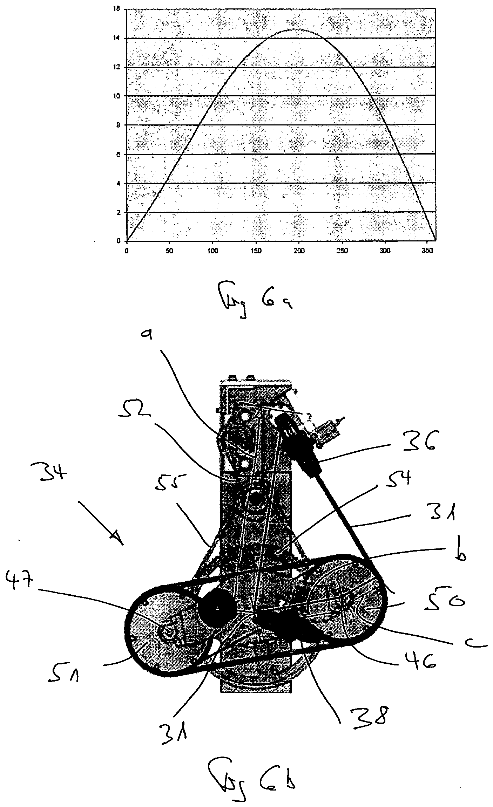

Diese vor-und-zurück Bewegung der Spindelwelle 74 ist zyklisch und unten anhand der Figuren 6a und 6b näher beschrieben. Der Antrieb der Spindelwelle ist mit dem Antrieb für die Haspel 34 derart gekoppelt, dass pro Umdrehung der Haspel 34 zwei Umdrehungen der Spindelwelle 74 erfolgen.

Dadurch führt der Schlitten 60 zwei überlagerte Bewegungen aus:
Einmal verschiebt er sich linear und proportional zu den Umdrehungen der Haspel 34 vor (in der Figur nach rechts, bei einem Drehsinn der Haspel 34 gemäss dem Pfeil 41 von Figur 3). Damit folgt der Schlitten 60 dem Wicklungsfortschritt auf der Haspel 34 und verschiebt über die Führungsrolle 36 den Seilpfad entsprechend. Dann verschiebt sich der Schlitten 60 zugleich aufgrund der zyklischen Bewegung der Spindelwelle 74 vor und zurück. Die zweite Bewegung erfolgt ebenfalls proportional zu den Umdrehungen der Haspel 36.

Während die lineare Bewegung des Schlittens 60 dem Wickelfortschritt folgt, ermöglicht die zyklische Bewegung das Seil 31 immer gerade gestreckt in einer Rille 52 abzulegen. Da die Rollen 50,51 und damit die Rillen 52 verschränkt sind, ändert die Ausrichtung einer jeweiligen Rille 52 gegenüber der Führungsrolle 36 laufend mit der Rotation der Haspel 36. Die zyklische Bewegung ermöglicht nun, trotz dieser laufend geänderten Ausrichtung das Seil 31 immer gerade in die jeweilige Rille 52 zu führen, was bei der vorliegenden Ausführungsform eine Bedingung für den reibungslosen Umlauf des Seils 31 darstellt. Diese zweite Bewegung ermöglicht vorliegend, das im auf die Haspel 36 aufgewickelte Seil betriebsfähig Windung für Windung neben einander aufzuwickeln, insbesondere dann, wenn die Rillen 52 der hohen Speicherkapazität wegen nahe bei einander liegen und nur so breit wie notwendig sind, um das Seil 31 aufnehmen zu können.

Figur 6a zeigt eine Kurve für die zyklische Verschiebung einer Spindelwelle, die auf die in Figur 6b gezeigte Geometrie des dort dargestellten Seilspeichers 80 abgestimmt ist. Auf der horizontalen Achse ist der Umdrehungswinkel der Haspel 36 und auf der vertikalen Achse der Vorschub der Spindelwelle 74 eingetragen.

Figur 6b zeigt die zur Kurve von Figur 6a gehörende Geometrie der Haspel 34 sowie der Führungsrolle 36. Der Abstand a beträgt 575 mm (Abstand von der Rotationsachse 40 der Haspel 36 zur oberen Kante der Rolle 36), der Abstand b beträgt 250 mm (Abstand der Rotationsachse 40 bis zur Achse des Wickelarms 46 bzw. dem Zentrum der Rolle 50), und der Abstand c beträgt 122 mm (Radius der Rolle 50). Der Abstand der Rillen 52 ist 15 mm.

Für eine andere Geometrie der Haspel 36 kann der Fachmann der Mathematik eine andere Kurve für den zyklischen Vorschub des Schlittens 60 bestimmen. Es ist ebenfalls möglich, diese Kurve durch Versuche zu ermitteln, indem eine Haspel konstruiert, schrittweise rotiert und die jeweiligen Positionen des Schlittens 60 festgestellt werden.

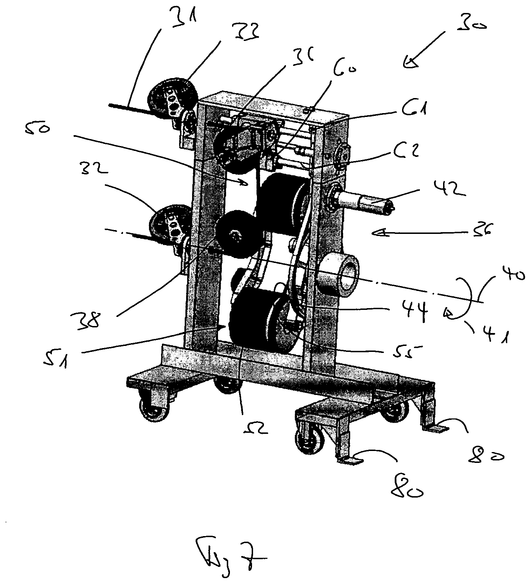

Figur 7 zeigt, wie der Seilspeicher 30 eingerichtet werden kann. Der Seilspeicher 30 wird vor Ort positioniert und das Sägeseil 31 bei entsprechender Stellung der Haspel 36 im Seilspeicher 30 verlegt: von der Einlaufrolle 32 über die Umlenkrolle 38 zur Führungsrolle 36 und von dieser zur Auslaufrolle 33. Dann kann der Seilspeicher 30 zurückgefahren werden, bis das Seil 31 der Darstellung der Figur entsprechend gespannt ist. Alternativ kann das noch lose Seil 31 auch gespeichert werden, bis es betriebsfähig gespannt ist. Mit Hilfe der Festlegeelemente 80 wird der Seilspeicher 30 dann fixiert, beispielsweise durch Dübel.

In der Darstellung von Figur 7 berührt die erste Rolle 50 das Seil 31 noch nicht. Mit der Rotation der Haspel in der Richtung des Pfeils 41 beginnt die Speicherung des Seils 31, s. Figur 3. In Figur 3 ist die Rolle 50 in das Seil 31 hinein gefahren, das nun in der ersten Rille 52 der Rolle 50 liegt und sich so um die Rolle 50 herumschlingt.

Da die Umlenkrolle 38 bei der weiteren Rotation der Haspel 36, wenn die Rolle 50 ihren tiefsten Punkt durchläuft, oberhalb dieser bleibt, bleibt das Seil 31 um die Rolle 50 herumgeschlungen und wird von dieser weiterhin mitgenommen, wenn bei noch weiterer Rotation der Haspel 36 die Rolle 50 für den Betrachter hinter der Bildebene wieder hochsteigt. Gleichzeitig stösst dann die Rolle 51 wie vorher die Rolle 50 an das von der Führungsrolle 36 her gegen die Haspel 36 laufende Seil 31, worauf dieses in die erste Rille 52 der Rolle 51 zu liegen kommt, und von dieser mitgenommen mitgenommen wird. Mit jeder Umdrehung der Haspel 36 füllt sich so der Seilspeicher 30 weiter auf. Durch eine Rotation in Gegenrichtung zum Pfeil 40 wird der Seilspeicher wieder gelehrt.

Mit anderen Worten ist es so, dass durch die Führungsrolle 38 und damit durch die Seilführungseinrichtung 37 der Seilpfad derart festgelegt wird, dass Seil 31 im Betrieb von der Haspel 34 ergriffen und aufgewickelt wird.

Der Schlitten 60 wird nun, wie oben beschrieben, dem Wicklungsfortschritt entsprechend verfahren, so dass das Seil zwischen der Führungsrolle 36 und der jeweiligen Rille 52 stets gerade gestreckt verläuft.

Bei der dargestellten Ausführungsform kann der Motor 42 aktiviert werden, sobald das Seil 31 um wenigstens eine der Rollen 50,51 herumgeschlungen ist, worauf die angetriebene oder die angetriebenen Rollen 50, 51 das Seil umlaufen lassen und die Sägeoperation ausgeführt werden kann.

Je nach dem konkret auszulegenden Seilspeicher bzw. Seilsäge kann der Fachmann die an den Wickelarmen angeordneten Rollen mit Rillen versehen oder nicht. Ebenso sind weitere Modifikationen möglich, beispielsweise kann bei grossem Abstand von der Führungsrolle zu den Wickelarmen oder bei sehr breiten Rillen auf die zyklische Bewegung des Schlittens verzichtet werden. Noch weitere Modifikationen sind möglich.

Insbesondere kann der Fachmann die Aufnahmefähigkeit des Seilspeichers durch die Länge der Wickelarme bzw. der Rollen festlegen: bei der Verwendung einer erfindungsgemässen Haspel ist diese Länge grundsätzlich nicht beschränkt, sondern kann frei gewählt werden. Sicher entfällt die im Stand der Technik herrschende faktische Speicherlimite von weniger als 15m.

## Patentansprüche

1. Seilspeicher (30) für ein geschlossenes Seil (31), das im Betrieb umläuft, wobei der Seilspeicher aufweist: eine rotierbare Haspel (34), auf die das Seil (31) aufgewickelt werden kann, Mittel, die den Pfad von zu speicherndem Seil (31) im Seilspeicher (30) festlegen, derart, dass es im Betrieb von der Haspel (34) ergriffen und aufgewickelt werden kann, und Mittel, um im Betrieb das auf der Haspel (34) aufgewickelte Seil (31) auf dieser umlaufen zu lassen, wobei die Haspel (34) zwei Wickelarme (46,47) aufweist, die je im Abstand, vorzugsweise in gleichem Abstand von deren Rotationsachse (40) angeordnet sind und wenigstens annähernd in derselben Richtung wie die Rotationsachse (40) ausgerichtet sind, und wobei die zwei Wickelarme (46,47) in parallelen Ebenen liegen, **dadurch gekennzeichnet, dass** die zwei Wickelarme (46, 47) zu einander windschief angeordnet sind, derart, dass im Betrieb auf den Wickelarmen (46,47) aufgewickeltes Seil (31) einlagig, Windung für Windung im Abstand nebeneinander, aufgewickelt wird.

2. Seilspeicher (30) nach Anspruch 1, wobei die Mittel zum Umlaufen von auf der Haspel (34) aufgewickeltem Seil (31) Rollen (50, 51) aufweisen, über die aufzuwickelndes Seil (31) auf der Haspel (34) aufliegt, wobei die Rollen (50, 51) an der Haspel (34) verdrehbar angeordnet sind, derart, dass aufgewickeltes Seil (31) durch die Haspel (34) hindurch umlaufen kann.

3. Seilspeicher (30) nach Anspruch 1, wobei die Rollen (50, 51) Führungen für das umlaufende Seil (31) aufweisen, die vorzugsweise als mindestens eine, kreisförmige Rille (52) ausgebildet sind.

4. Seilspeicher (30) nach Anspruch 1, wobei die Mittel, die den Seilpfad festlegen, eine Seilführungsanordnung (35) aufweisen, die in Wicklungsrichtung vor der Haspel (34) angeordnet und ausgebildet ist, den Pfad von aufzuwickelndem Seil (31) auf der Haspel (34) in Abhängigkeit vom Wicklungsfortschritt festzulegen.

5. Seilspeicher (30) nach Anspruch 4, wobei die Seilführungsanordnung (35) ausgebildet ist, den Seilpfad unmittelbar vor der Haspel (34) vom einen Ende der Haspel (34) bis zu ihrem anderen Ende vor zu verschieben, derart, dass sich die Haspel (34) im Betrieb vom einen Ende her bis zum anderen Ende Lage für Lage mit Seil (31) füllen kann.

6. Seilspeicher (30) nach Anspruch 1 und 5, wobei die Seilführungsanordnung ausgebildet ist, den Seilpfad linear und proportional zu den Umdrehungen der Haspel (34) entlang dieser vor zu verschieben und zugleich in einer der linearen Bewegung überlagerten zweiten Bewegung den Seilpfad proportional zu den Umdrehungen der Haspel (34) zyklisch vor und wieder zurück zu verschieben, derart, dass im Betrieb das auf die Haspel (34) aufgewickelte Seil (31) auf den windschiefen Armen der Haspel (34) betriebsfähig Windung für Windung nebeneinander aufgewickelt wird.

7. Seilspeicher (30) nach Anspruch 6, wobei die Seilführungsanordnung eine Gewindespindel für die lineare Bewegung des Seilpfads und eine Kurvenscheibe für die zweite, überlagerte Bewegung des Seilpfads aufweist, wobei die Gewindespindel längsverschieblich in der Seilführungsanordnung angeordnet ist und durch die Kurvenscheibe zyklisch längs hin- und her bewegt werden kann.

8. Seilspeicher (30) nach Anspruch 1, wobei die Mittel, die den Seilpfad festlegen, eine Seilführungseinrichtung aufweisen, die in Wicklungsrichtung hinter der Haspel (34) angeordnet und ausgebildet ist, den Seilpfad hinter der Haspel (34) derart festzulegen, dass im Betrieb die Haspel (34) das Seil (31) ergreift und aufwickelt.

9. Seilspeicher (30) nach Anspruch 1 und 8, wobei die Seilführungseinrichtung eine Umlenkrolle aufweist, die den Seilpfad hinter der Haspel (34) derart festlegt, dass bei Rotation der Haspel (34) das Seil (31) einen ersten Wickelarm umschlingt, derart, dass es durch diese Schlinge vom ersten Wickelarm mitgeführt und dadurch bei weiterer Rotation der Haspel (34) fortlaufend auf diese aufgewickelt wird.

10. Seilspeicher (30) nach Anspruch 9, wobei die Umlenkrolle relativ zur Haspel (34), vorzugsweise and der Haspel (34) festgelegt ist, derart, dass der Seilpfad hinter der Haspel (34) um die Rolle herumläuft und nach der Rolle in einem Abschnitt mit der Rotationsachse der Haspel (34) zusammenfällt.

11. Seilspeicher (30) nach Anspruch 1, wobei ein Antrieb vorgesehen ist, der im Betrieb das Seil (31) durch den Speicher hindurch umlaufen lässt.

12. Seilspeicher (30) nach Anspruch 1 und 11, wobei der Antrieb auf mindestens einen Wickelarm einwirkt.

13. Seilspeicher (30) nach Anspruch 2 und 11, wobei der Antrieb die Rollen (50, 51) mindestens eines der Wickelarme (46,47) antreibt.

## Claims

1. Wire storage (30) for a closed wire (31) which revolves in operation, wherein the wire storage has:
a rotatable reel (34) onto which the wire (31) can be wound;
means which establish the path of wire (31) to be stored in the wire storage (30) in such a manner that said wire (31) in operation can be acquired by the reel (34) and wound up; and
means which in operation permit the wire (31) that is wound onto the reel (34) to revolve thereon, wherein the reel (34) has two winding arms (46, 47) which in each case are disposed from the rotation axis (40) thereof at a spacing, preferably an identical spacing, and which are aligned in at least approximately the same direction as the rotation axis (40), and wherein the two winding arms (46, 47) lie in parallel planes;
**characterized in that**
the two winding arms (46, 47) are mutually disposed in a skewed manner such that wire (31) that in operation is wound onto the winding arms (46, 47) is wound coiling-by-coiling so as to be spaced apart in a single layer.

2. Wire storage (30) according to Claim 1, wherein the means for revolving the wire (31) that is wound onto the reel (34) have rollers (50, 51) by way of which wire (31) that is to be wound bears on the reel (34), wherein the rollers (50, 51) are disposed so as to be rotatable on the reel (34) in such a manner that wire (31) that is wound up can revolve through the reel (34).

3. Wire storage (30) according to Claim 1, wherein the rollers (50, 51) have guides for the revolving wire (31), said guides preferably being configured as at least one circular channel (52).

4. Wire storage (30) according to Claim 1, wherein the means which establish the wire path have a wire guide assembly (35) which in the winding direction is disposed ahead of the reel (34) and is configured for establishing the path of wire (31) to be wound on the reel (34) so as to depend on the winding progress.

5. Wire storage (30) according to Claim 4, wherein the wire guide assembly (35) is configured for displacing the wire path directly in front of the reel (34) from one end of the reel (34) to the other end of the latter in such a manner that the reel (34) in operation can be filled from one end to the other end layer-by-layer with wire (31).

6. Wire storage (30) according to Claims 1 and 5, wherein the wire guide assembly is configured for displacing the wire path along the reel (34) in linear manner and proportionally to the revolutions of said reel (34), and, in a second movement that is superimposed on the linear movement, for simultaneously displacing the wire path proportionally to the revolutions of the reel (34) in a cyclical reciprocating manner such that the wire (31) that in operation is wound onto the reel (34) is wound up coiling-by-coiling beside one another on the skewed arms of the reel (34) in an operationally fit manner.

7. Wire storage (30) according to Claim 6, wherein the wire guide assembly has a threaded spindle for the linear movement of the wire path and a cam disc for the second superimposed movement of the wire path, wherein the threaded spindle is disposed so as to be longitudinally displaceable in the wire guide assembly and can be moved longitudinally in a cyclical reciprocating manner by the cam disc.

8. Wire storage (30) according to Claim 1, wherein the means which establish the wire path have a wire guide installation which in the winding direction is disposed behind the reel (34) and is configured for establishing the reel (34) in such a manner that the reel (34) in operation acquires the wire (31) and winds up the latter.

9. Wire storage (30) according to Claims 1 and 8, wherein the wire guide installation has a deflection roller which establishes the wire path behind the reel (34) in such a manner that the wire (31) in the case of a rotating reel (34) wraps a first winding arm in such a manner that said wire by way of said wrapping is entrained by the first winding arm and, on account thereof, in the case of any further rotation of the reel (34) is continuously wound up on the latter.

10. Wire storage (30) according to Claim 9, wherein the deflection roller is established relative to the reel (34), preferably on the reel (34), in such a manner that the wire path behind the reel (34) runs about the roller and in a portion behind the roller is congruent with the rotation axis of the reel (34).

11. Wire storage (30) according to Claim 1, wherein a drive which in operation (31) permits the wire (31) to revolve through the storage is provided.

12. Wire storage (30) according to Claims 1 and 11, wherein the drive acts on at least one winding arm.

13. Wire storage (30) according to Claims 2 and 11, wherein the drive drives the rollers (50, 51) of at least one of the winding arms (46, 47).

## Revendications

1. Dispositif de stockage de câble (30) pour un câble fermé (31) qui, pendant le fonctionnement, est entraîné en circulation, le dispositif de stockage de câble présentant :
un enrouleur rotatif (34) sur lequel le câble (31) peut être enroulé, des moyens qui définissent le trajet du câble à stocker (31) dans le dispositif de stockage de câble (30) de telle sorte que celui-ci puisse être saisi et enroulé par l'enrouleur (34) pendant le fonctionnement, et des moyens permettant, pendant le fonctionnement, au câble (31) enroulé sur l'enrouleur (34) de circuler sur celui-ci, l'enrouleur (34) présentant deux bras d'enroulement (46, 47) qui sont chacun disposés à distance, de préférence à la même distance, de leur axe de rotation (40) et qui sont orientés au moins approximativement dans la même direction que l'axe de rotation (40), et les deux bras d'enroulement (46, 47) étant situés dans des plans parallèles, **caractérisé en ce que** les deux bras d'enroulement (46, 47) sont disposés en biais par rapport à l'autre de telle sorte que pendant le fonctionnement, le câble (31) enroulé sur les bras d'enroulement (46, 47) soit enroulé en une seule couche, une spire après l'autre et l'une à côté de l'autre.

2. Dispositif de stockage de câble (30) selon la revendication 1, dans lequel les moyens permettant la circulation du câble (31) enroulé sur l'enrouleur (34) présentent des rouleaux (50, 51) par le biais desquels le câble à enrouler (31) repose sur l'enrouleur (34), les rouleaux (50, 51) étant disposés de manière à pouvoir tourner sur l'enrouleur (34) de telle sorte que le câble enroulé (31) puisse circuler à travers l'enrouleur (34).

3. Dispositif de stockage de câble (30) selon la revendication 1, dans lequel les rouleaux (50, 51) présentent des guides pour le câble en circulation (31), lesquels sont de préférence réalisés sous forme d'au moins une rainure de forme circulaire (52) .

4. Dispositif de stockage de câble (30) selon la revendication 1, dans lequel les moyens qui définissent le trajet du câble présentent un agencement de guidage de câble (35) qui est disposé dans la direction d'enroulement avant l'enrouleur (34) et qui est réalisé de manière à définir le trajet du câble à enrouler (31) sur l'enrouleur (34) en fonction du progrès de l'enroulement.

5. Dispositif de stockage de câble (30) selon la revendication 4, dans lequel l'agencement de guidage de câble (35) est réalisé de manière à déplacer vers l'avant le trajet du câble directement avant l'enrouleur (34) depuis une extrémité de l'enrouleur (34) jusqu'à son autre extrémité de telle sorte que l'enrouleur (34), pendant le fonctionnement, puisse se remplir avec le câble (31) depuis une extrémité jusqu'à l'autre extrémité, couche par couche.

6. Dispositif de stockage de câble (30) selon les revendications 1 et 5, dans lequel le dispositif de guidage de câble est réalisé de manière à déplacer le trajet de câble vers l'avant de manière linéaire et proportionnellement aux rotations de l'enrouleur (34) le long de celui-ci et en même temps dans un deuxième déplacement superposé au déplacement linéaire, de manière à déplacer cycliquement le trajet de câble de manière proportionnelle aux rotations de l'enrouleur (34) de manière cyclique vers l'avant puis vers l'arrière de telle sorte que pendant le fonctionnement, le câble (31) enroulé sur l'enrouleur (34) soit enroulé sur les bras obliques de l'enrouleur (34) en fonction du fonctionnement, une spire après l'autre et l'une à côté de l'autre.

7. Dispositif de stockage de câble (30) selon la revendication 6, dans lequel l'agencement de guidage de câble présente une broche filetée pour le déplacement linéaire du trajet de câble et un disque de came pour le deuxième déplacement superposé du trajet de câble, la broche filetée étant disposée de manière déplaçable longitudinalement dans l'agencement de guidage de câble et pouvant être déplacée cycliquement longitudinalement vers l'avant et vers l'arrière par le disque de came.

8. Dispositif de stockage de câble (30) selon la revendication 1, dans lequel les moyens qui définissent le trajet de câble présentent un dispositif de guidage de câble qui est disposé dans la direction d'enroulement derrière l'enrouleur (34) et qui est réalisé de manière à définir le trajet de câble derrière l'enrouleur (34) de telle sorte que pendant le fonctionnement, l'enrouleur (34) saisisse et enroule le câble (31).

9. Dispositif de stockage de câble (30) selon les revendications 1 à 8, dans lequel le dispositif de guidage de câble présente une poulie de renvoi qui définit le trajet de câble derrière l'enrouleur (34) de telle sorte que lors de la rotation de l'enrouleur (34), le câble (31) entoure un premier bras d'enroulement de telle sorte qu'il soit entraîné par cette boucle par le premier bras d'enroulement et que lors de la rotation supplémentaire de l'enrouleur (34), il continue d'être enroulé sur celui-ci.

10. Dispositif de stockage de câble (30) selon la revendication 9, dans lequel la poulie de renvoi est fixée par rapport à l'enrouleur (34), de préférence sur l'enrouleur (34), de telle sorte que le trajet de câble circule derrière l'enrouleur (34) autour de la poulie et, après la poulie, coïncide au niveau d'une section avec l'axe de rotation de l'enrouleur (34).

11. Dispositif de stockage de câble (30) selon la revendication 1, dans lequel il est prévu un entraînement qui, pendant le fonctionnement, permet au câble (31) de circuler à travers le dispositif de stockage.

12. Dispositif de stockage de câble (30) selon les revendications 1 et 11, dans lequel l'entraînement agit sur au moins un bras d'enroulement.

13. Dispositif de stockage de câble (30) selon les revendications 2 et 11, dans lequel l'entraînement entraîne les rouleaux (50, 51) d'au moins l'un des bras d'enroulement (46, 47).
